# EUROPÄISCHE PATENTANMELDUNG

(11) **EP 0 839 632 A1**
(43) Veröffentlichungstag der Anmeldung: **06.05.1998**
(21) Anmeldenummer: 96810831.6
(22) Anmeldetag: 28.11.1996
(51) Int. Cl.: B29C 49/76, B29C 49/64

(54) **Verfahren und Vorrichtung zum Kristallisieren und Ausformen des Mündungsbereichs an einem Vorformling für das Blasformen eines Behälters**

(30) Priorität: 31.10.1996 EP 96810725
(71) Anmelder: Constar International Holland (Plastics) BV, 6940 AA Didam (NL)
(72) Erfinder: Van Buuren-Teuwsen, Maria Gerarda, 6904 DR Zevenaar (NL); Elbertsen, Hendrik Jan Willem, 6951 DM Dieren (NL)
(74) Vertreter: Hepp, Dieter

(57) **Zusammenfassung**

In einem Verfahren zum Kristallisieren und Ausformen eines Mündungsbereichs (2) eines Vorformlings aus einem unter Wärmeeinwirkung kristallisierbaren Kunststoff wie PET, PEN oder Co-Polymeren, aus PET/PEN wird ein Behälterrohling wenigstens in einem Mündungsabschnitt (4) auf Kristallisationstemperatur erwärmt, so dass er zu 20% kristallisiert wird. Während der Kristallisation verringert sich der Aussendurchmesser des Mündungsabschnitts (4) durch Schrumpfung von einem Anfangswert (A) auf einen kleineren Zwischenwert (Z). In einem weiteren Verfahrensschritt wird der Mündungsabschnitt (4) mit einem Aufweitstempel (15) gegen ein äusseres Formwerkzeug (10) derart aufgeweitet, dass sein Aussendurchmesser einen Endwert (E) aufweist, der zwischen dem Anfangswert (A) und dem Zwischenwert (Z) liegt. Dabei reduziert sich die Wanddicke des Mündungsabschnitts (4) von einem Anfangswert (d₁) auf einen Endwert (d₃), wobei dank dem spezifisch gewählten Verfahren diese Reduktion kleiner als 20% bleibt.

## Beschreibung

Die Erfindung betrifft ein Verfahren und eine Vorrichtung zum Kristallisieren und Ausformen des Mündungsbereichs an einem Vorformling für das Blasformen eines Behälters, insbesondere einer Flasche, gemäss dem Oberbegriff der unabhängigen Patentansprüche. Solche Vorformlinge werden zunächst im Spritzgussverfahren als im wesentlichen zylindrische, einseitig geöffnete Hohlkörper hergestellt und dann im Mündungsbereich ausgeformt. Erst in einem weiteren Arbeitsgang erfolgt dann die Herstellung des endgültigen Behälters durch Blasformen, wobei die Wandstärke des Vorformlings erheblich reduziert wird. Bei der Ausformung des Mündungsbereichs wird in der Regel ein Aussengewinde zum Aufschrauben einer Schraubkappe angeformt. Insbesondere bei Mehrwegflaschen, welche in jedem Zyklus unter hohen Temperaturen kaustisch gewaschen werden, bestehen hohe Erfordernisse an Formstabilität des Mündungsbereichs, damit die Flasche auch nach wiederholtem, heissem Waschen dichtend mit einem Verschluss verschlossen werden kann. Beim Heisswaschen bestehen vor allem die Probleme, dass das Material aufgrund der Wärmeeinwirkung schrumpft, oder dass sich Spannungsrisse ergeben. Ausserdem ist es wesentlich, dass bereits beim Ausformen des Mündungsbereichs genau definierte Dichtungszonen mit kleinen Toleranzen gebildet werden, damit die entsprechende Flasche über sämtliche Zyklen dichtend verschlossen werden kann.

Aus der US 4,499,044 ist ein Verfahren zum Herstellen eines Vorformlings bekannt, bei dem die Oberkante des Mündungsbereichs ausschliesslich durch eine umlaufende Schulter an einem Formdorn gebildet wird. Der Endbereich des Vorformlings wird von einem Formwerkzeug umschlossen und das Material des Vorformlings wird mit einem Stempel nach aussen ausgedehnt und in ein Formwerkzeug gepresst. Dabei reduziert sich die Wandstärke des Mündungsbereiches wesentlich, was zu Spannungsrissen bei späteren Reinigungs- und Wiederbefüllzyklen führen kann.

Aus der US 4,476,084 ist ausserdem ein Verfahren zum Erhöhen der Widerstandsfähigkeit einer Behältermündung bekannt, bei welcher die Mündung durch Wärmeeinwirkung kristallisiert und auf einen im Inneren der Mündung liegenden Stempel geschrumpft wird. Der Nachteil dieser Methode besteht darin, dass der äussere Mündungsbereich nicht durch ein Werkzeug genau definiert wird, sondern sich erst durch das Schrumpfen bildet. Mit diesem Verfahren ist es deshalb schwierig, genau definierte Dichtpartien mit kleinen Toleranzen zu erzielen.

Aus der US 4,933,135 ist ausserdem ein Verfahren zum Herstellen eines Vorformlings oder eines Behälters mit einem formbeständigen Mündungsbereich bekannt. Auch dieses Verfahren weist als Nachteil eine starke Reduktion der Wandstärke des Mündungsbereichs auf, welche zu Spannungsrissen führen kann.

Die Aufgabe der vorliegenden Erfindung besteht darin, die Nachteile des Bekannten zu vermeiden, insbesondere also ein Verfahren zum Kristallisieren und Ausformen eines Mündungsbereichs eines Vorformlings oder eines Behälters zu schaffen, welcher Mündungsbereich eine Dichtpartie mit kleinen Toleranzen und eine gute Formstabilität auch während mehreren Wiederbefüll- und Waschzyklen aufweist.

Eine weitere Aufgabe besteht darin, eine Vorrichtung zum Herstellen eines Vorformlings zu schaffen. Die Mündung soll mit möglichst kleinen Materialbewegungen geformt werden. Grosse Materialbewegungen bergen die Gefahr von Spannungsrissen aber auch von Luftblasen, welche sich im Kunststoff oder an der Oberfläche zwischen Werkzeug und Kunststoff bilden können.

Diese Aufgaben werden mit einem Verfahren gemäss dem kennzeichnenden Teil von Anspruch 1 und 8 sowie mit einer Vorrichtung mit den Merkmalen des kennzeichnenden Teils von Anspruch 9 gelöst.

In einem Verfahren zum Kristallisieren und Ausformen eines Mündungsbereichs eines Behälters wird von einem Rohling aus einem unter Wärmeeinwirkung kristallisierbaren Kunststoff ausgegangen. Dabei lassen sich vor allem Kunststoffe wie PET oder PEN aber auch Co-Polymere oder Blends aus PET und PEN verwenden. Der Rohling wird durch Spritzgusstechnik hergestellt und weist vor dem Ausformen des Mündungsbereichs eine im wesentlichen zylindrische Aussenfläche auf. Bereits im Spritzgussverfahren herstellt werden können nach aussen vorstehende Gewinde für einen Verschluss und Rippen, beispielsweise ein Transferring oder ein Wulst zum Rückhalten eines Garantiebandes.

Im Mündungsbereich können insbesondere auch Gewindegänge zum Aufschrauben eines Verschlusses ausgeformt werden. Oberhalb dieser Gewindegänge befindet sich ein Mündungsabschnitt, welcher eine Dichtpartie bilden kann. Gegenstand der vorliegenden Erfindung ist das Ausformen dieses Mündungsbereichs.

Der Rohling wird in einem ersten Verfahrensschritt wenigstens im Mündungsabschnitt, vorzugsweise im ganzen Mündungsbereich, auf wenigstens Kristallisationstemperatur erwärmt und sodann vorzugsweise zu mindestens 20% kristallisiert. Während dieser Kristallisation verringert sich der Aussendurchmesser des Mündungsabschnitts durch Schrumpfung von einem Anfangswert auf einen kleineren Zwischenwert. Im allgemeinen wird der ganze Mündungsbereich kristallisiert, was auch zu einer Schrumpfung des ganzen Mündungsbereichs führt. Die Schrumpfung ist aber insbesondere wesentlich für den obersten Mündungsabschnitt, der eine Dichtfläche zu einem Verschluss bilden kann. Der Umfang dieses äussersten Mündungsabschnitts weist nach der Schrumpfung nicht mehr die geforderten Toleranzen auf, vor allem sind auch bei Schwankungen der Wandstärke unterschiedliche Schrumpfwerte zu beobachten. In einem weiteren Arbeitsschritt wird sodann der Mündungsabschnitt gegen ein äusseres Formwerkzeug derart aufgeweitet, dass der Aussendurchmesser des Mündungsabschnitts einen Wert aufweist, der grösser als der Aussendurchmesser nach der Schrumpfung aber kleiner als der Aussendurchmesser des Mündungsabschnitts in der ursprünglichen, gespritzen Form ist.

Durch die Aufweitung des Mündungsabschnitts mit einem Aufweitwerkzeug, beispielsweise mit einem in die Öffnung des Rohlings einschiebbaren Stempel wird der Mündungsabschnitt in das Formwerkzeug gepresst, wodurch sich eine genau definierte Aussenfläche mit geringen Toleranzen ergibt. Wenn im Mündungsbereich bereits beim Herstellen des Rohlings ein Gewinde geformt wird, muss der Rohling in ein Formwerkzeug ausgerichtet werden, welches mit Aussparungen für die Gewindegänge versehen ist. In diesem Fall wird nicht nur der oberste Mündungsabschnitt sondern der ganze Mündungsbereich aufgeweitet. Zum Ausrichten kann der Rohling mit einem Vorsprung versehen werden, welcher von einem Sensor erfasst werden kann. Anstelle eines Vorsprungs sind auch Luftblasen, Einkerbungen (beispielsweise in einem Transferring) oder Verfärbungen denkbar.

Beim Formen eines axialsymmetrischen Rückhaltewulstes für einen Schnappverschluss erübrigt sich selbstverständlich eine solche Ausrichtung.

Der Mündungsabschnitt wird vor seiner Aufweitung vom Formwerkzeug umschlossen, so dass dieses in Berührung oder nahezu in Berührung mit der Oberfläche des Mündungsabschnitts steht. Das äussere Formwerkzeug ist also vollständig geschlossen, bevor der Formvorgang des Mündungsbereichs beginnt. Damit wird die Gefahr vermieden, dass Material zwischen einzelnen Teilen eines mehrteiligen Formwerkzeugs hinausgepresst wird. Es hat sich gezeigt, dass die Verwendung eines dreiteiligen Formwerkzeugs, bei welchem jeder Teil je etwa einen Kreissektor von 120° umschliesst, besonders vorteilhaft ist.

Selbstverständlich kann das Formwerkzeug im Mündungsbereich, unterhalb des Mündungsabschnittes Aussparungen aufweisen, in welche etwaige Gewindegänge des Rohlings durch die Aufweitung gepresst werden können.

Auf diese Weise können Gewindegänge im Mündungsbereich ausgeformt werden.

Es ist ausserdem denkbar, den ganzen Mündungsbereich zusätzlich in seiner axialen Richtung zu stauchen. Der Vorteil dieses Verfahrens besteht einerseits darin, dass damit die Oberkante des Mündungsabschnitts genau definiert ausgebildet wird, und dass andererseits Material zur Verfügung steht, welches die Wanddickenverringerung aufgrund des Aufweitens kompensiert.

In einem besonders bevorzugten Ausführungsbeispiel beträgt die Reduktion des Aussendurchmessers des Mündungsabschnitts zwischen dem Anfangswert (der Durchmesser am unbearbeiteten Rohling) und dem Endwert (Aussendurchmesser am fertig ausgeformten Vorformling) zwischen 1% und 3%, vorzugsweise 2%.

Besonders vorteilhaft ist es, wenn der freie Innendurchmesser der Mündung um wenigstens 1% aufgeweitet wird.

Als Resultat der Reduktion des Aussendurchmessers und der Aufweitung des freien Innendurchmessers resultiert eine Reduktion der Wandstärke des Mündungsabschnitts, die höchstens 20% und vorteilhaft nicht mehr als 10% beträgt.

In einem weiteren, vorteilhaften Ausführungsbeispiel wird wenigstens der Mündungsabschnitt am Ende des Kristallisationsvorgangs auf wenigstens Warmverformungs-Temperatur erhitzt. Während der Kristallisation nimmt die Temperatur des Mündungsabschnitts aufgrund von laufender Wärmezufuhr kontinuierlich zu. Das Verfahren ist besonders ökonomisch, wenn die Temperatur des Mündungsabschnitts nach Erreichen des gewünschten Kristallisationsgrades von mindestens 20% die Warmverformungs-Temperatur erreicht. Die Ausformung des Mündungsabschnitts kann gleich anschliessend an die Kristallisation ohne weitere Wärmezufuhr durchgeführt werden.

Besonders vorteilhaft wird das erfindungsgemässe Verfahren mit einem sich in Einschiebrichtung konisch verjüngenden Stempel ausgeführt. Der sich konisch verjüngende Stempel wird in die Öffnung des Rohlings eingeschoben und weitet den Mündungsbereich auf. Dank der konischen Aufweitung ergibt sich eine sanfte Aufweitung des Mündungsabschnitts.

Da das Material des Rohlings während des Aufweitvorgangs Warmverformungs-Temperatur aufweist, kann die Gefahr bestehen, dass die Innenfläche des Rohlings und der Aufweitstempel zusammenkleben. Dieses Risiko wird mit dem Verwenden eines Aufweitstempels mit einem Gleitbelag reduziert. Besonders vorteilhaft ist ein Belag aus Polytetrafluorethylen.

Die erfindungsgemäss Vorrichtung zum Ausformen eines Mündungsbereichs, insbesondere zum Aufweiten wenigstens eines Abschnittes der Mündung eines Behälters oder eines Vorformlings weist im wesentlichen einen Aufweitstempel und ein äusseres Formwerkzeug auf. Das äussere Formwerkzeug dient zum Umschliessen der Aussenfläche des Mündungsabschnitts und weist einen freien Innendurchmesser auf, der kleiner als der Aussendurchmesser des Mündungsabschnitts des Rohlings und grösser als der Aussendurchmesser des ausgeformten Mündungsabschnitts ist. Der Aufweitstempel ist in einer Einschiebrichtung in die Öffnung des Rohlings einschiebbar und weist über seine Länge im wesentlichen eine zylindrische Aussenfläche auf. Die Aussenfläche ist in Einschiebrichtung in einem Endabschnitt des Aufweitstempels konisch verjüngt ausgebildet. Der Mündungsabschnitt des Rohlings wird vom Formwerkzeug umschlossen, während der Mündungsbereich mit Hilfe des Aufweitstempels gegen die Innenfläche des Formwerkzeugs gepresst wird.

Das Formwerkzeug kann mit Aussparungen zur Aufnahme von am Rohling gespritzten Gewindegängen versehen sein. Bei asymmetrischen Gewinden ist ausserdem eine Ausrichteinrichtung vorhanden, welche den Rohling bezüglich dem Formwerkzeug ausrichtet.

Das Formwerkzeug der erfindungsgemässen Vorrichtung weist vorteilhaft zwei oder mehr, insbesondere zwei oder vier Teile auf, welche sich je etwa über ein Kreissegment von 180° oder 90° erstrecken.

Der Aufweitstempel der erfindungsgemässen Vorrichtung ist gemäss einem besonders vorteilhaften Ausführungsbeispiel mit einem Gleitbelag versehen. Besonders günstig ist die Verwendung von Polytetrafluorethylen. Es ist aber auch denkbar, andere, dem Fachmann bekannte Beschichtungen aufzuweisen, die die Gleit- und Antihafteigenschaften der Oberfläche des Aufweitstempels für das auf Warmverformungs-Temperatur erwärmte thermoplastische Kunststoffmaterial verbessern.

Die Erfindung wird im folgenden in Ausführungsbeispielen und anhand der Zeichnungen genauer erläutert. Es zeigen
- Figur 1: einen Querschnitt/eine Seitenansicht eines Rohlings vor dem Ausformen eines Mündungsabschnitts,
- Figuren 2a bis 2d: schematisch einzelne Verfahrensschritte zum Ausformen des Mündungsabschnitts,
- Figur 3: einen Querschnitt durch den Mündungsbereich eines Vorformlings,
- Figur 4: eine schematische Darstellung eines Aufweitstempels,
- Figur 5: eine schematische Darstellung einer erfindungsgemässen Vorrichtung, und
- Figur 6: ein Mündungsbereich eines Ausführungsbeispiels mit einem axialsymmetrischen Rückhaltewulst.

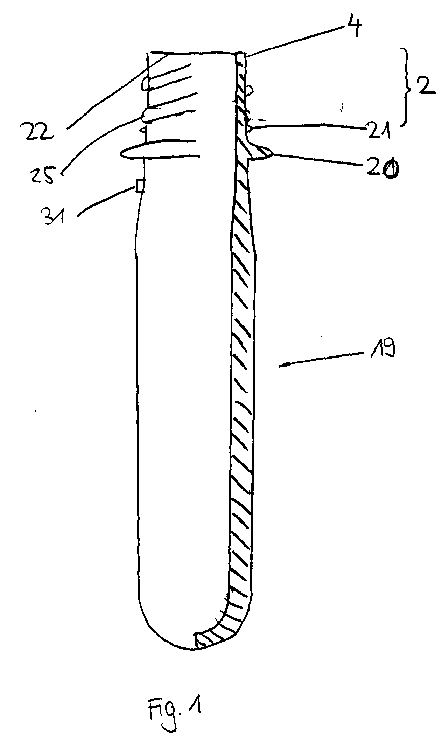

Figur 1 zeigt einen Rohling 19 zur Herstellung eines Vorformlings. Der Rohling 19 wird im Spritzgussverfahren herstellt und weist einen Transferring 20 und einen Rückhaltewulst 21 sowie ein Gewinde 25 auf, welche auch bereits im Spritzgussverfahren geformt werden. Der Rohling 19 ist im weiteren innen im wesentlich hohlzylindrisch ausgebildet und an einem Ende verschlossen. Ausgehend vom Rohling 19 kann ein Vorformling zum Blasformen eines Behälters, insbesondere einer Flasche hergestellt werden. Ein Vorsprung 31 dient zum Ausrichten des Rohlings 19 in einem Formwerkzeug.

Der Rohling 19 weist an einem offenen Ende 22 einen Mündungsbereich 2 auf, welcher zur Aufnahme eines Verschlusses ausgeformt, insbesondere mit Dichtzonen und Gewinden versehen werden ist.

Für die vorliegende Erfindung besonders wesentlich ist ein Mündungsabschnitt 4, der sich benachbart zum offenen Ende 22 des Rohlings 19 befindet. Der Mündungsabschnitt 4 wird zur Bildung einer Dichtfläche ausgeformt.

Figur 2a zeigt eine vergrösserte Darstellung des Mündungsbereichs 2 des gespritzten Rohlings 19. Der Mündungsabschnitt 4 gemäss Figur 2a ist noch nicht ausgeformt. Der Aussendurchmesser des Mündungsabschnitts weist einen Anfangswert A auf. Während der freie Innendurchmesser einen Anfangswert I₁ aufweist. Durch Wärmeeinwirkung wird der Mündungsbereich 2, insbesondere der Mündungsabschnitt 4 kristallisiert. Die Wärme kann von einer nicht näher dargestellt Infrarot-Heizvorrichtung aufgebracht werden.

Figur 2b zeigt den kristallisierten Mündungsbereich 2 des Rohlings 1. Durch die Kristallisation schrumpft der Mündungsbereich, insbesondere der Mündungsabschnitt 4, sodass sein Aussendurchmesser einen Zwischenwert Z und der freie Innendurchmesser einen Wert I₂ erhalten. Die Wärmezufuhr wird solange aufrecht erhalten, bis der Kristallisationsgrad im Mündungsbereich 2 mindestens 20% erreicht hat.

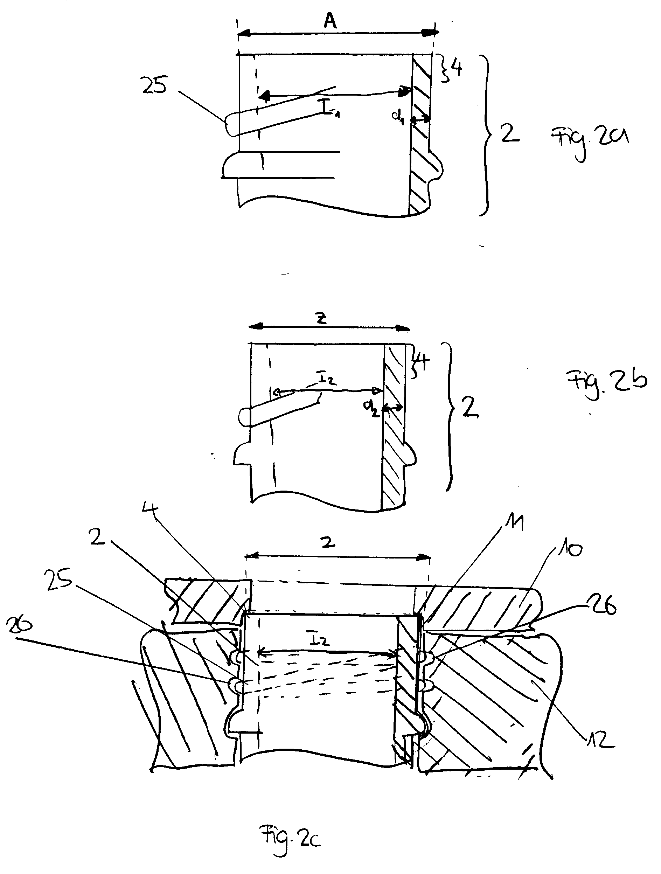

In einem weiteren Verfahrensschritt (Figur 2c) wird der Rohling 19, insbesondere dessen Mündungsabschnitt 4 von einem Formwerkzeug 10 umschlossen. Das Formwerkzeug 10 besteht aus drei, sich je über einen Winkelbereich von 120° erstreckenden Teilen, welche so zusammengefügt werden können, dass sie mit ihrer Innenfläche nahe zum Mündungsabschnitt 4 zu liegen kommen oder diesen sogar berühren. Zwischen dem Mündungsabschnitt 4 und der Innenfläche des Formwerkzeugs 10 wird auf diese Weise ein Ringspalt 11 gebildet, welcher durch die Innenfläche des Formwerkzeugs 10 eine genau definierte Form aufweist. In Figur 2c ist im weiteren ein zweites Formwerkzeug 12 gezeigt, welches zur Ausbildung der Gewindegänge 25 im Mündungsbereich 2 des Rohlings 19 dient. Das Formwerkzeug 12 ist zur Aufnahme der Gewindegänge 25 mit Aussparungen 26 versehen.

Gemäss dem Verfahrensschritt in Figur 2d wird der Rohling 19, insbesondere dessen Mündungsabschnitt 4 mit einem Aufweitstempel 15 aufgeweitet. Durch diesen letzten Verfahrensschritt wird ein Vorformling 1 zur Herstellung eines Behälters geformt. Der Stempel 15 ist in einer Einschiebrichtung R in das offene Ende 22 des Rohlings einführbar. Der Aufweitstempel 15 ist über seine Länge im wesentlichen zylindrisch ausgeformt und weist an seinem einen Ende einen, sich in Einschiebrichtung R konisch verjüngenden Endabschnitt 17 auf. Der zylindrische Teil des Stempels 15 weist einen Aussendurchmesser auf, der grösser ist, als der freie Innendurchmesser I₂ des Rohlings gemäss Figuren 2b oder 2c. Durch das Einschieben des Aufweitstempels wird der Rohling, insbesondere der Mündungsabschnitt 4 aufgeweitet und gegen die Innenfläche des Werkzeugs 10 gepresst. Die Innenfläche des Formwerkzeugs 10 weist einen Innendurchmesser auf, der dem gewünschten Endwert E des Aussendurchmessers des Mündungsabschnitts 4 entspricht. Der Mündungsabschnitt 4 wird mit dem Aufweitstempel 15 gegen das Formwerkzeug 10 gepresst und erhält so eine genau definierte, regelmässige Oberfläche mit geringen Toleranzen.

Die Gewinde 25 werden in die Aussparungen 26 gepresst und erhalten eine genau definierte Struktur.

Es ist auch möglich, die Gewindegänge nicht während der Herstellung des Rohlings zu spritzen, sondern erst durch Warmverformung während des Aufweitens auszuformen. Bei diesem nicht näher dargestellten Verfahren wird der Mündungsbereich 2 beim Aufweiten in die Aussparungen 26 gepresst. Der Vorteil dieses Verfahrens ist, dass der Rohling nicht ausgerichtet werden muss. Der Nachteil besteht in den relativ grossen Materialverschiebungen im Bereich der Gewinde 25.

Der Aussendurchmesser des Mündungsabschnitts 4 verändert sich während des Ausformens von einem Anfangswert A (siehe Figur 2a) über einen Zwischenwert Z (siehe Figur 2b, 2c) zu einem Endwert E (siehe Figur 2d). Die Grösse des Endwerts des Aussendurchmessers ist insbesondere in Hinblick auf Dichteigenschaften des Mündungsabschnitts 4 wesentlich.

In Figur 2d ist auch ersichtlich, wie das Gewinde des Mündungsbereichs 2 in das zweite Formwerkzeug 12 gepresst wird, wodurch das Aussengewinde im Mündungsbereich 2 ausgeformt wird. Es ist ausserdem möglich, auch die Stirnseite 23 des Mündungsabschnitts 4 durch Stauchung präzise auszuformen.

Während des Ausformungsvorgangs, welche in Figuren 2a bis 2d dargestellt ist, verändert sich selbstverständlich auch der freie Innendurchmesser I des Mündungsabschnitts 4. Durch die Schrumpfung während der Kristallisation reduziert sich der freie Innendurchmesser von einem Anfangswert I₁ zu einem Zwischenwert I₂. Durch die Aufweitung mit dem Aufweitstempel 15 wird der Innendurchmesser auf einen Endwert I₃ vergrössert. Dies hat selbstverständlich auch einen Einfluss auf die Wanddicke, welche durch den Ausformvorgang von einem Anfangswert d₁ auf einen Endwert d₃ reduziert wird. Dank dem erfindungsgemässen Ausformungsverfahren ist es möglich, die Wandstärke d des Mündungsabschnitts 4 während des Ausformungsverfahrens um weniger als 20%, vorteilhaft weniger als 10% zu reduzieren. Der freie Innendurchmesser wird während dem Verfahren um wenigstens 1% aufgeweitet (Verhältnis von I₃ zu I₁) während der Aussendurchmesser vom Anfangswert A zum Endwert E während dem Ausformungsvorgang um 1% bis 3% reduziert.

### Beispiel:

Ausgehend von einem Rohling mit einem maximalen Aussendurchmesser im Mündungsabschnitt 4 von 25,33 mm und einem freien Innendurchmesser im Mündungsabschnitt 4 von 20,5 mm wird ein Vorformling 1 hergestellt, welcher einen Innendurchmesser von 20,75 mm und einen Aussendurchmesser im Mündungsabschnitt 4 von 24,95 mm aufweist. Der maximale Aussendurchmesser des Mündungsabschnitts 2 wird durch die Gewindegänge definiert und beträgt beim konkreten Ausführungsbeispiel 27,45 mm.

Zum Formen einer Oberfläche der Stirnseite 23 mit kleinen Toleranzen kann diese in Einschiebrichtung R mit einem Werkzeug gestaucht werden. Daraus resultiert eine Kompression des ganzen Mündungsbereichs 2, welcher zusätzliches Material zur Formung der Gewindegänge zur Verfügung stellen kann.

Der Zwischenwert Z des Aussendurchmessers des Mündungsabschnitts 4 (siehe Figur 2b, 2c) hängt von der Kristallisation ab und beträgt im oben dargestellten konkreten Beispiel 24,4 mm.

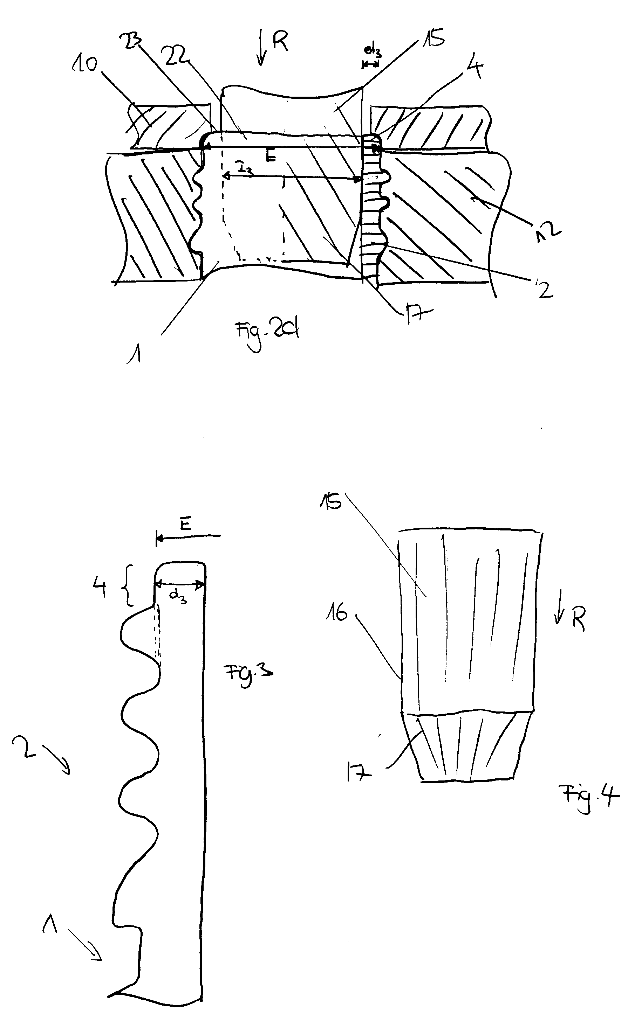

Figur 3 zeigt einen Querschnitt durch eine Seitenwand eines Vorformlings 1 mit einem fertig ausgebildeten Mündungsbereich 2. Im Mündungsabschnitt 4 weist der Vorformling 1 einen Aussendurchmesser E und eine Wanddicke d₃ auf. Der Aussendurchmesser wird durch die Form des Formwerkzeugs 10 und die Wanddicke d₃ sowohl vom Formwerkzeug 10 als auch von dem Aussendurchmesser des Aufweitstempels 15 bestimmt. Wie Figur 3 zeigt, definieren Gewindegänge im Mündungsbereich 2 einen maximalen und einen minimalen Aussendurchmesser. Der minimale Aussendurchmesser zwischen den Gewindegängen ist bei diesem Ausführungsbeispiel kleiner gewählt als der Endwert E des Aussendurchmessers des Mündungsabschnitts 4.

Figur 4 zeigt schematisch einen Aufweitstempel 15 mit einem sich in Einschiebrichtung R konisch verjüngenden Endabschnitts 17. Zur Verringerung der Haftung des auf Wärmeverformungs-Temperatur erhitzten thermoplastischen Kunststoffmaterials auf der Oberfläche des Aufweitstempels 15 ist dieser mit einem Gleitbelag 16 beschichtet.

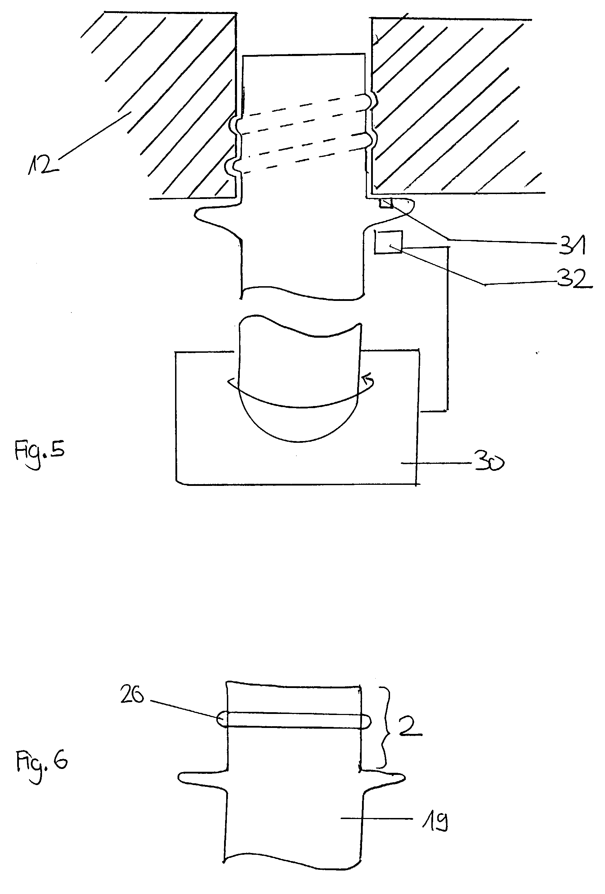

Figur 5 zeigt schematisch eine erfindungsgemässe Vorrichtung, welche mit einer Ausrichteinrichtung 30 zum Ausrichten des Rohlings 19 im Formwerkzeug 10 versehen ist. Die Einrichtung 30 dreht den Rohling 19 derart, dass die Gewindegänge 25 des Rohlings in die Aussparungen 26 des Formwerkzeugs 12 passen. Zum Bestimmen der richtigen Position weist die Einrichtung 30 ausserdem einen Sensor 32 auf. Der Sensor 32 bestimmt die Lage des Rohlings 19 aufgrund eines bestimmten Ausformungsmerkmals, beispielsweise einer Einkerbung 31.

Figur 6 zeigt den Mündungsbereich 2 eines Rohlings, der zur Herstellung einer mit Schnappverschlüssen verschliessbaren Flasche ausgebildet ist. Der Mündungsbereich ist mit einem axialsymmetrischen Wulst 26 versehen, welcher von einem Schnappverschluss untergriffen werden kann. Der Wulst 26 kann ebenfalls beim Aufweitvorgang in entsprechend ausgebildete Aussparungen eines Formwerkzeugs gepresst werden. Bei axialsymmetrischen Vorsprüngen wie in diesem Fall erübrigt sich allerdings das Vorsehen einer Ausrichteinrichtung 30.

Durch das Vorsehen von bereits vorgeformten Gewindegängen 25 oder Wülsten 26 im Mündungsbereich 2 des Rohlings 19, welche in entsprechende Aussparungen im Formwerkzeug gepresst werden, lassen sich die Materialverschiebungen beim Aufweiten zusätzlich verringern, was zu kleineren Spannungsrissen und Lufteinschlüssen führt.

Es ist selbstverständlich, dass bei diesem Verfahren, bei welchem Teile des Rohlings gegen eine äussere Form aufgeweitet werden, Massnahmen getroffen werden müssen, welche das Abfliessen der im Ringspalt 11 enthaltenen Luft ermöglichen. Solche Massnahmen sind dem Fachmann bekannt und nicht Gegenstand dieser Erfindung.

## Patentansprüche

1. Verfahren zum Kristallisieren und Ausformen eines Mündungsbereichs (2) eines Behälters, insbesondere eines Vorformlings (1) aus einem Rohling (19) aus unter Wärmeeinwirkung kristallisierbarem Kunststoff, insbesondere aus PET, PEN oder Co-Polymeren aus PET/PEN,
dadurch gekennzeichnet, dass wenigstens ein Mündungsabschnitt (4) des Rohlings (19) wenigstens auf Kristallisationstemperatur erwärmt und zu mindestens 20% kristallisiert wird,
wobei sich der Aussendurchmesser des Mündungsabschnitts (4) durch Schrumpfung während der Kristallisation von einem Anfangswert (A) auf einen kleineren Zwischenwert (Z) reduziert,
und dass sodann der Mündungsabschnitt (4) gegen ein äusseres Formwerkzeug (10) derart aufgeweitet wird, dass sein Aussendurchmesser einen Endwert (E) aufweist, der nicht grösser, vorzugsweise kleiner als der Anfangswert (A) und gleich oder grösser als der Zwischenwert (Z) ist.

2. Verfahren nach Anspruch 1, dadurch gekennzeichnet, dass der Aussendurchmesser vom Anfangswert (A) zum Endwert (E) um 1% bis 3%, vorzugsweise 2% verringert wird.

3. Verfahren nach einem der Ansprüche 1 oder 2, dadurch gekennzeichnet, dass der freie Innendurchmesser (I) des Mündungsabschnitts (4) während des Ausformens von einem Anfangswert (I₁) um wenigstens 1% auf einen Endwert (I₃) aufgeweitet wird.

4. Verfahren nach einem der Ansprüche 1 bis 3, dadurch gekennzeichnet, dass die Wandstärke des Mündungsabschnitts (4) während des Ausformungsvorgangs von einem Anfangswert (d₁) um höchstens 20%, vorzugsweise weniger als 10%, auf einen Endwert (d₃) reduziert wird.

5. Verfahren nach einem der Ansprüche 1 bis 4, dadurch gekennzeichnet, dass der Mündungsabschnitt (4) bei Erreichen eines Kristallisationsgrades von 20% wenigstens Warmverformungs-Temperatur des thermoplastischen Kunststoffs aufweist.

6. Verfahren nach einem der Ansprüche 1 bis 5, dadurch gekennzeichnet, dass der Mündungsabschnitt (4) mit einem sich in einer Einschiebrichtung (R) konisch verjüngenden Stempel (15) aufgeweitet wird.

7. Verfahren nach Anspruch 8, dadurch gekennzeichnet, dass ein mit einem Gleitbelag (16), insbesondere ein mit Polytetrafluorethylen beschichteter Aufweitstempel (15) verwendet wird.

8. Verfahren zum Kristallisieren und Ausformen eines Mündungsbereichs (2) eines Behälters, insbesondere eines Vorformlings (1) aus einem Rohling (19) aus unter Wärmeeinwirkung kristallisierbarem Kunststoff, insbesondere aus PET, PEN oder Co-Polymeren aus PET/PEN,
dadurch gekennzeichnet, dass der Mündungsbereich (2) gegen ein äusseres Formwerkezug (10) derart aufgeweitet wird, dass sich der Innendurchmesser (I) des Mündungsbereichs (2) um 1% bis 3% vergrössert, wobei sich die Wandstärke des Mündungsabschnittes (4) um nicht mehr als 20%, vorzugsweise um 6% bis 10% reduziert.

9. Vorrichtung zum Aufweiten wenigstens eines Abschnitts (4) einer Mündung (8) eines Rohlings (19) zum Formen eines Vorformlings (1), dadurch gekennzeichnet, dass die Vorrichtung einen in die Mündung (8) einschiebbaren, im wesentlichen zylindrischen Aufweitstempel (15) aufweist, der in einer Einschiebrichtung (R) einen sich konisch verjüngenden Endabschnitt (17) aufweist,
wobei die Vorrichtung ausserdem ein äusseres Formwerkzeug (10) aufweist, gegen welches der Abschnitt 4 der Mündung (8) des Rohlings (19) aufweitbar ist.

10. Vorrichtung nach Anspruch 9, dadurch gekennzeichnet, dass der Aufweitstempel mit einem Gleitbelag (16) versehen ist.

11. Vorrichtung nach Anspruch 10, dadurch gekennzeichnet, dass die Gleitbelag (16) aus Polytetrafluorethylen besteht.

12. Vorrichtung nach einem der Ansprüche 9 bis 11, dadurch gekennzeichnet, dass das Formwerkzeug (10) wenigstens zweiteilig ausgebildet ist.

13. Vorrichtung nach einem der Ansprüche 9 bis 12, dadurch gekennzeichnet, dass die Vorrichtung eine Ausrichteinrichtung (30) zum Ausrichten des Rohlings (19) im Formwerkzeug (10) aufweist, wobei das Formwerkzeug (10) Aussparungen (26) zur Aufnahme von Gewindegängen (25) des Rohlings (19) aufweist.
